(19) Europäisches Patentamt / European Patent Office / Office européen des brevets

(11) **EP 2 096 807 B1**

(12) **EUROPEAN PATENT SPECIFICATION**

(45) Date of publication and mention
of the grant of the patent:
**18.04.2012  Bulletin 2012/16**

(51) Int Cl.:
*H04L 12/56* (2006.01)    *H04W 72/12* (2009.01)
*H04W 72/04* (2009.01)

(21) Application number: **08102146.1**

(22) Date of filing: **29.02.2008**

(54) **Interference-considerate scheduling in a wireless communication network**

Interferenz-berücksichtigende Planung von Übertragungen in einem drahtlosen Kommunikationsnetzwerk

Planification des transmissions à considération d'interférence dans un réseau de communication sans fil

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**02.09.2009  Bulletin 2009/36**

(73) Proprietor: **Telefonaktiebolaget L M Ericsson (Publ)**
**126 25 Stockholm (SE)**

(72) Inventor: **Larsson, Peter**
**SE-169 71, Solna (SE)**

(74) Representative: **Kühn, Friedrich Heinrich**
**Ericsson AB**
**Patent Unit LTE**
**Torshamnsgatan 23**
**164 80 Stockholm (SE)**

(56) References cited:
**WO-A1-2004/040803    WO-A1-2005/125263**
**US-A1- 2006 233 131**

• **KNOPP R ET AL: "INFORMATION CAPACITY AND POWER CONTROL IN SINGLE-CELL MULTIUSER COMMUNICATIONS" PROCEEDINGS OF THE INTERNATIONAL CONFERENCE ON COMMUNICATIONS, vol. 1, 18 June 1995 (1995-06-18), - 22 June 1995 (1995-06-22) pages 331-335, XP000533006 ISBN: 978-0-7803-2487-9**

**Description**

**TECHNICAL FIELD**

The present invention generally relates to wireless communication systems, and more particularly to scheduling in such networks.

**BACKGROUND**

In wireless communication systems, scheduling plays an important role for the overall performance. Scheduling is normally part of the general resource management, and typically involves allocating communication resources, such as the transmission resources of a shared radio medium, to users of the communication system.

In particular, when a lot of users enjoy the communication services, the available communication resources need to be allocated efficiently. This requires an efficient strategy and implementation for scheduling access to the communication resources.

**SUMMARY**

It is a general object of the present invention to improve the scheduling of transmissions in a wireless communication system.

In particular it is desirable to provide data rate enhancements, reduced latency and/or improved system capacity.

It is a specific object to provide a method and arrangement for scheduling transmissions in a wireless communication network.

It is also a specific object to provide an improved scheduling node for operation in a wireless network.

These and other objects are met by the invention as defined by the accompanying patent claims.

The invention relates to communication between nodes such as a sending node and a designated (desired) receiving node in a wireless communication network. A basic idea of the invention is to use a scheduling criterion that considers to what extent a transmission from a sending node to a designated receiving node would affect or interfere with one or more other receiving nodes, denoted interfered receiving node(s). In particular, the invention determines a scheduling measure based on a relation between, on one hand, an estimate of mean interference caused to the interfered receiving node(s), and, on the other hand, an estimate of instantaneous interference caused to the interfered receiving node(s), and performs scheduling of transmission at least partly based on the scheduling measure.

In other words, the relation used for scheduling is representative of the degree of instantaneous interference, caused by the sending node to the interfered receiving node(s), relative to the corresponding average or mean interference level.

In this way, it is possible to find a moment in time or a time-frequency resource when a sending node interferes less with the interfered receiving node(s) than it does on average, or to find a sending node among multiple candidate sending nodes that has a low degree of relative instantaneous interference compared to the other candidate nodes. In the latter case, a scheduling priority order among the multiple sending nodes is normally determined based on respective interference-considerate scheduling measures. In general, a low degree of relative instantaneous interference is indicative of relatively higher scheduling priority than a high degree of relative instantaneous interference.

This means that efficient exploitation of the transmission resources is ensured, with improved system performance as a result.

In a preferred, exemplary embodiment, the scheduling measure is based on both the communication quality between the sending node and the desired receiving node and to what extent the transmission affects other interfered receiving nodes. This means that "fading peaks" to the desired receiver and "fading dips" to one or more interfered receivers may be concurrently exploited to provide rate enhancements for individual users as well as enhanced aggregate system rate, and possible reductions in latency.

Other advantages offered by the invention will be appreciated when reading the below description of embodiments of the invention.

**BRIEF DESCRIPTION OF THE DRAWINGS**

The invention, together with further objects and advantages thereof, will be best understood by reference to the following description taken together with the accompanying drawings, in which:

Fig. 1 is a schematic simplified network overview involving a sending node, a designated receiving node and a number of interfered receiving nodes.

Fig. 2 is a schematic simplified network overview involving a number of sending nodes, a designated receiving node and a number of interfered receiving nodes.

Fig. 3 is a schematic flow diagram of a scheduling method according to a preferred exemplary embodiment.

Fig. 4 is a schematic simplified network view involving a base station and a mobile terminal with a scheduling criterion according to the prior art.

Fig. 5 is a schematic simplified network view involving a base station and a mobile terminal with a scheduling criterion according to a preferred exemplary embodiment

Fig. 6 is a schematic simplified network view involving a base station and a mobile terminal with a scheduling criterion according to another preferred exemplary embodiment

Fig. 7 is a schematic flow diagram of a communication and scheduling procedure according to an exemplary embodiment.

Fig. 8 is a schematic flow diagram of a communication and scheduling procedure according to another exemplary embodiment

Fig. 9 is a schematic flow diagram of a scheduling procedure according to an exemplary embodiment corresponding to Fig. 8.

Fig. 10 is a schematic flow diagram of a communication and scheduling procedure according to yet another exemplary embodiment.

Fig. 11 is a schematic flow diagram of a scheduling procedure according to an exemplary embodiment corresponding to Fig. 10.

Fig. 12 is a schematic block diagram of a node with scheduling functionality according to a preferred exemplary embodiment.

Fig. 13 is a schematic block diagram of a node on the network side for scheduling users according to a preferred exemplary embodiment.

Fig. 14 is a schematic diagram illustrating a situation where measurements and computations are performed on the mobile side and scheduling is performed on the base station side based on a reported scheduling measure.

Fig. 15 is a schematic diagram illustrating a situation where measurements are performed on the mobile side and computations and scheduling are performed on the base station side based on reported interference/quality information.

## DETAILED DESCRIPTION

Throughout the drawings, the same reference characters will be used for corresponding or similar elements.

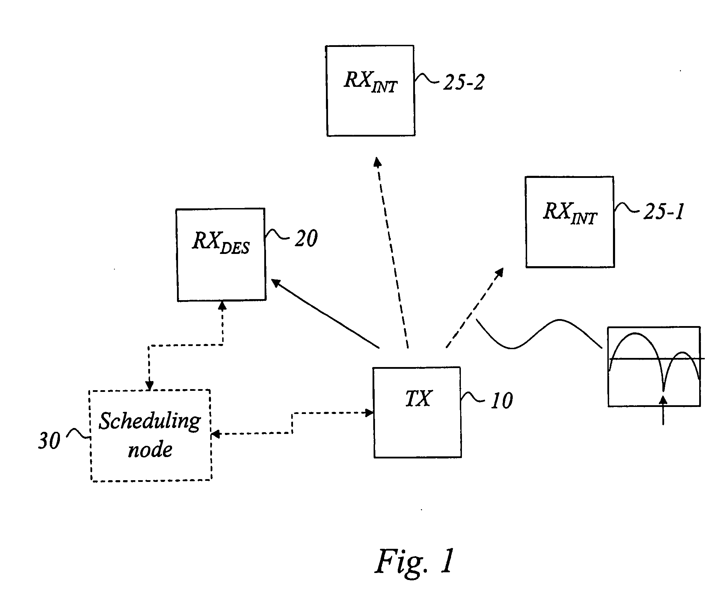

As illustrated in the simplified diagram of Fig. 1, the invention relates to communication between nodes such as a sending node TX 10 and a designated (desired) receiving node $RX_{DES}$ 20 in a wireless communication network. A basic idea of the invention is to use a scheduling criterion that considers to what extent the sending node TX 10 would affect or interfere with one or more other receiving nodes, denoted interfered receiving node(s) $RX_{INT}$ 25-1, 25-2 during transmission to the designated receiving node $RX_{DES}$ 20. In particular, the invention determines a scheduling measure based on a relation between, on one hand, an estimate of mean interference caused to the interfered receiving node (s) 25-1, 25-2 by the sending node 10, and, on the other hand, an estimate of instantaneous interference caused to the interfered receiving node(s), and performs scheduling of a transmission from the considered sending node 10 to its corresponding designated receiving node 20 at least partly based on the scheduling measure.

The relation will represent the degree of instantaneous interference, caused by the sending node to the interfered receiving node(s), relative to the corresponding average or mean interference level. The relation may for example be expressed as a ratio between mean and instantaneous interference, or a ratio between instantaneous and mean interference depending on the objective of the overall optimization, i.e. if it aims at minimizing or maximizing an objective function. Other mathematical relations between the mean and instantaneous interference can also be used.

By monitoring the instantaneous interference relative to the mean interference caused by the sending node 10 to one or more interfered receiving nodes 25-1, as indicated in the small illustrative curve graph in Fig. 1 it is possible to find a moment in time, or a time-frequency resource in combined time-frequency space, when the sending node 10 interferes less than it does on average. This means that it would be suitable to schedule the transmission to this moment in time, or analogously to an optimal time-frequency resource in combined time-frequency space. The scheduling with respect to a time-frequency resource becomes interesting when the radio communication channel is frequency selective, i.e. the signal quality varies over the frequency band.

This means that efficient exploitation of the transmission resources is ensured, with resulting enhancements in user data rate as well as aggregate system data rate, possible reductions in latency and/or improved overall system performance. Preferably, the enhancements in data rates can be accomplished while ensuring some degree of fairness.

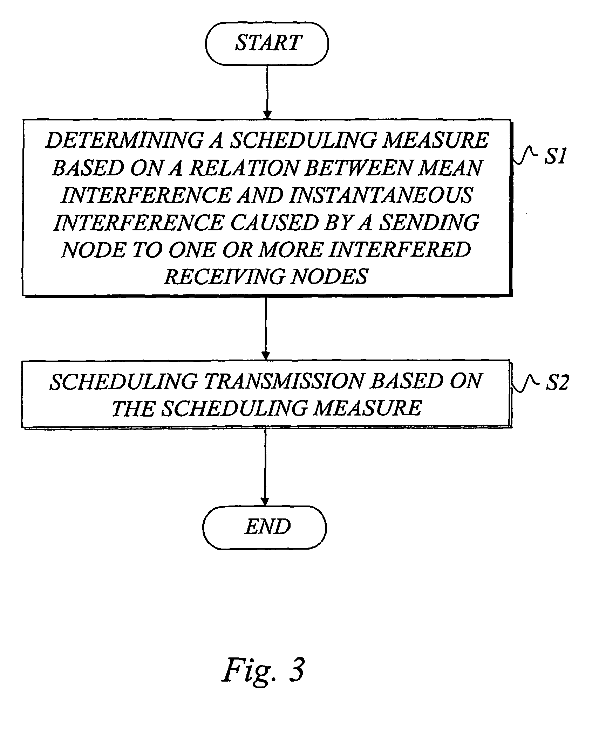

In general, the scheduling algorithm determines (S1) a scheduling measure based on the relation, optionally using additional input parameters, and performs channel-dependent scheduling (S2) based on the determined scheduling measure, as schematically illustrated in Fig. 3.

The actual scheduling may be performed in the sending node 10, for example as a scheduling decision to a random access channel, or by the designated receiving node 20, an associated network controller or a dedicated scheduling node 30, which may be scheduling transmissions for multiple users.

The invention is thus applicable to random access channel scheduling, as well as uplink scheduling and downlink scheduling in modem and future systems such as HSPA (High Speed Packet Access) and LTE (Long Term Evolution) systems.

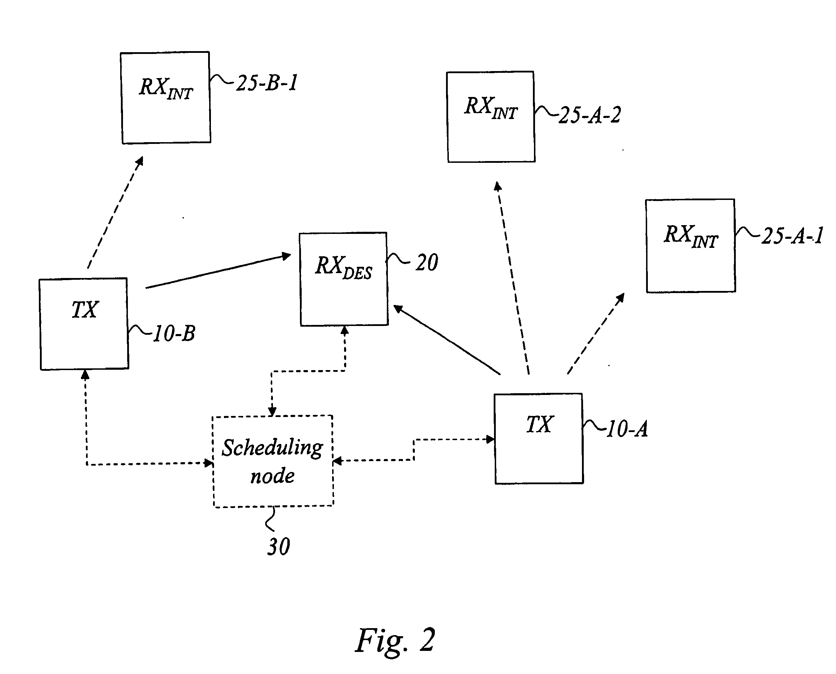

For the specific case of multi-user scheduling, as schematically illustrated in simplified form in Fig. 2, the aim would be to find a sending node among multiple candidate sending nodes 10-A, 10-B that has a low degree of relative instantaneous interference compared to the other candidate nodes. In practice, the relative instantaneous interference would then be monitored for each of a number of sending nodes 10-A, 10-B (users), and a scheduling priority order determined among the multiple sending nodes based on respective interference-considerate scheduling measures. In general, a low degree of relative instantaneous interference is indicative of relatively higher scheduling priority than a high degree of relative instantaneous interference.

The invention is further applicable to both Time Division Duplex (TDD) and Frequency Division Duplex (FDD) based communications. For TDD, the reciprocity of the radio channel may be exploited for channel estimation to reduce the signaling requirements.

The invention is applicable to at least the following exemplary scheduling cases:

- Single user (in time domain) for i) a frequency-flat channel or ii) a selected frequency sub-band, simply referred to as a frequency channel, of a frequency-selective radio channel.

- Multiple users (in time domain) for i) a frequency-flat channel or ii) a selected frequency sub-band, simply referred to as a frequency channel, of a frequency-selective radio channel.

- Single user, multiple frequency channels.

- Multiple users, multiple frequency channels.

It is thus possible to determine, for each of a number of sending nodes (users), a respective scheduling measure, and perform scheduling of transmission by selecting a sending node among the considered sending nodes for transmission based on the determined scheduling measures.

It is also possible to determine, for each of a number of frequency channels of a considered sending node (user), a respective channel-dependent scheduling measure, and scheduling the sending node for transmission on a selected one of the frequency channels based on the scheduling measures.

For multiple sending nodes (users) and multiple frequency channels, the determination procedure preferably includes determining, for each frequency channels and for each sending node (user), a respective channel-dependent scheduling measure, and performing scheduling of transmission by selecting a sending node among the sending nodes for transmission on a selected frequency channel based on the scheduling measures. Naturally, the scheduling may involve determining a scheduling priority order for the users, with a selected user having the highest scheduling priority.

In the case of scheduling over multiple frequency channels, the overall procedure will "automatically" involve channel allocation. When multiple users and multiple frequency channels are considered, it is possible to perform joint user scheduling and channel allocation, as will be explained later on.

The invention is generally applicable in wireless communication systems such as cellular networks, ad hoc networks as well as so-called cognitive radio based systems.

In a preferred, exemplary embodiment, the scheduling measure is based on both the communication quality between the sending node and the desired receiving node and to what extent the transmission affects other interfered receiving nodes. This means that "fading peaks" to the desired receiver and "fading dips" to one or more interfered receivers may be concurrently exploited to provide rate enhancements for individual users as well as enhanced aggregate system rate. This is particularly useful for uplink scheduling in mobile communication systems since the power resources of the mobile terminals are typically limited, and it is vital to offer good and solid performance also for mobile users at the cell borders. With the invention mobile users at the cell borders are enabled to increase their data rates, while not causing excessive interference to base stations and users in adjacent cells.

As mentioned, the scheduler is a key element to provide higher data rates, reduced latency and improved system capacity in modem communication systems such as packet based wireless systems. In particular, channel dependent scheduling, also referred to as opportunistic scheduling, is a well known mechanism in cellular systems to enhance system and user data rate performance.

Traditionally, channel-dependent opportunistic scheduling has been considered mainly in the downlink, for example in systems based on High Speed Downlink Packet Access (HSDPA) and High Data Rate (HDR). For example, the downlink channel in HSDPA is shared between users by means of channel-dependent scheduling to take advantage of favorable channel conditions in order to make best use of the available radio resources.

Channel-dependent opportunistic scheduling has also been discussed for the uplink [1], [5], [6].

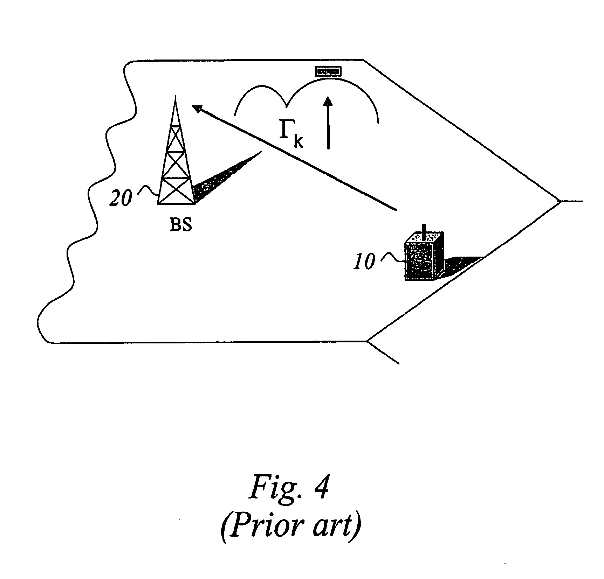

Fig. 4 illustrates a mobile terminal/user 10 for communication with a base station (BS) 20 according to the prior art. With respect to channel-dependent scheduling for a frequency-flat channel, i.e. here used as one example, a simple common quality metric $C_k$ for a user k for scheduling may be based on the instantaneous carrier to noise and interference ratio (CINR) $\Gamma_k$ to average carrier to noise and interference ratio (CINR) $\overline{\Gamma}_k$ according to:

$$C_k = \frac{\Gamma_k}{\overline{\Gamma}_k}, \qquad\qquad (1)$$

A scheduled user $\tilde{u}_k$ may then be selected among the set of all users $U$ (not shown in the simplified diagram of Fig. 4) based on:

$$\tilde{u}_k = \max_{u_k \in U} \arg\{C_k\}, \qquad\qquad (2)$$

where the user with the highest relative quality ratio is selected or assigned the highest scheduling priority. It is also possible to simply select a point in time when the instantaneous CINR value is high ("a fading peak") compared to the average CINR level, as indicated in the small illustrative curve graph in Fig. 4, and schedule the mobile for access to a random access channel.

Alternatively, one may consider the average and instantaneous channel gain (hence neglect transmit power, and interference and noise levels):

$$C_k = G_k / \overline{G}_k, \qquad\qquad (3)$$

In yet another alternative method, the instantaneous $R_k$ data rate to average $\overline{R}_k$ data rate according to:

$$C_k = \frac{R_k}{\overline{R}_k}, \qquad\qquad (4)$$

The drawback of the rate criteria, if based on channel capacity rather than measured data rates, is that it is unfair, due to the non-linear relationship between signal-to-noise ratio and rate (compare with the Shannon capacity formula).

In practice, many other factors are typically also considered in the scheduling process.

A problem with the above approach for channel dependent scheduling criterion is that it is based on a link view, i.e. not opted for cellular systems, in that it does not consider the effects of a transmission in other parts of the system. In particular, it is of interest to offer an efficient scheduling criterion for the uplink as the power resources of the mobile stations typically are limited, and it is vital to offer good performance also for the users at the cell-borders.

Although the description below mainly focuses on the uplink case in a cellular system, it should be understood that the invention is not limited thereto, as will be explained later on.

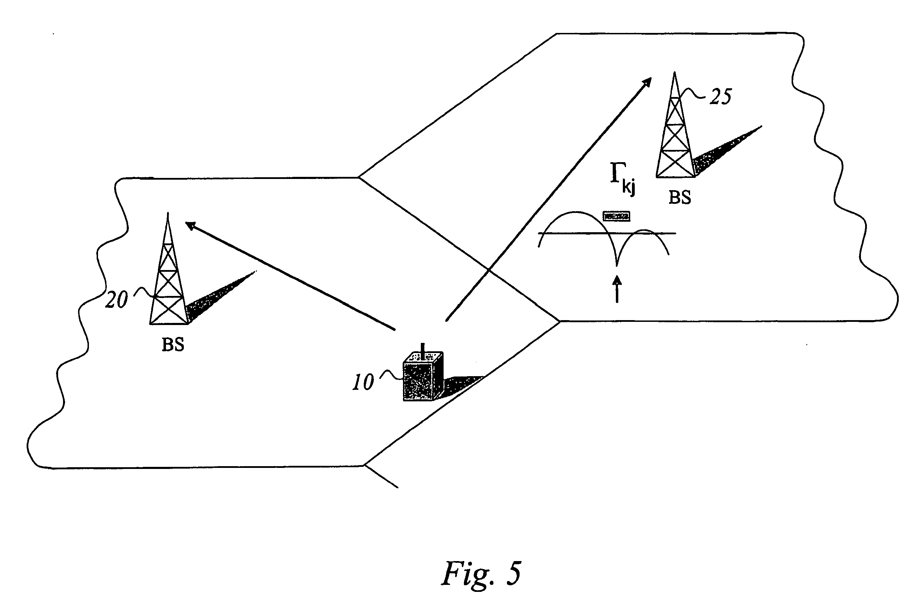

The invention strives to consider not only how good the own link is, but also or primarily or even exclusively to what extent the transmission from a sending node such as a mobile terminal 10 to a designated receiving node 20 such as a desired base station (BS) affects one or more other so-called interfered receiving nodes 25 such as other base stations, as schematically illustrated in Fig. 5. As schematically indicated in the small illustrative curve graph in Fig. 5, the mobile terminal 10 may be selected for transmission to the designated receiving node 20 based on the degree of instantaneous interference relative to the average interference level of the interfered receiving node 25. When the interference is instantaneously low compared to the average level it may be suitable to schedule the mobile terminal 10 for transmission.

By way of example, identify at least one receiver *j* (such as BS 25) that will be (substantially) affected (for instance the worst affected) by interference if a user *k* (such as mobile 10) transmits to a designated/desired receiver i (such as BS 20). In this particular example, the instantaneous and average carrier to noise and interference ratios (CINR) between user *k* and receiver *j* are $\Gamma_{kj}$ and $\overline{\Gamma}_{kj}$ respectively. An exemplary scheduling measure to be used for scheduling of transmission from the sending node k to the designated receiver i may be expressed as:

$$C_{ki} = \frac{\overline{\Gamma}_{kj}}{\Gamma_{kj}}. \qquad (5)$$

A scheduling metric that accounts for instantaneous and mean interference to one or more potentially interfered station(s) *j* for receiver *i*, may be generalized as:

$$C_{ki} = f\left(\Gamma_{kj}, \overline{\Gamma}_{kj}, ....\right), \qquad (6)$$

where f is an objective function of suitable form to suppress generated interference.

Here, carrier to noise and interference ratios (CINR) are merely used as an example, and it should be understood that the invention is not limited thereto. In fact any suitable measure for estimating the caused interference may be used, including but not limited to Signal-to-Interference Ratio (SIR), Signal-to-Noise-and-Interference Ratio (SINR), Carrier-to-Interference Ratio (CIR), Carrier-to-Noise-and-Interference Ratio (CINR), channel capacity, channel gain, Packet Error Rate (PER), data rates and expected throughput. For example, it may sometimes be more natural to use mean and instant gains in the above equations, rather than carrier to noise and interference ratios.

If the sender 10 does not interfere substantially to any receiver, traditional scheduling such as a classical optimized own link channel-dependent scheduling may be used.

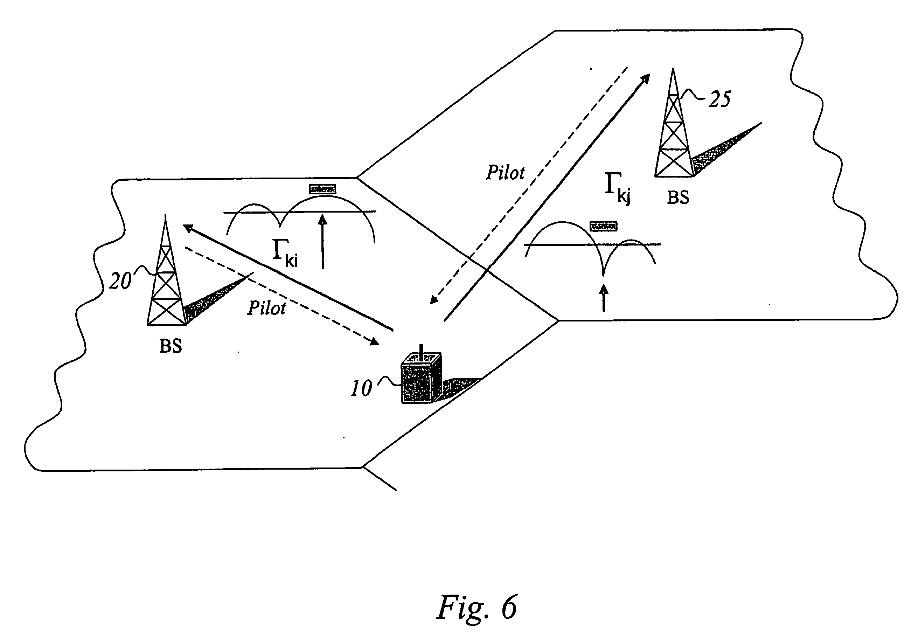

As illustrated in Fig. 6, it may be beneficial to consider both the quality of the own link as well as the degree of relative instantaneous interference when determining a suitable scheduling measure. If both quality of the own desired link and interference to other receivers is to be considered, a joint scheduling measure is preferably determined based on a weighted combination of relative instantaneous quality of the own link and relative instantaneous interference to one or more other receivers. With same notation as used above, a possible heuristic measure to be used at scheduling may then be defined as:

$$C_{ki} = \alpha_1 \frac{\Gamma_{ki}}{\overline{\Gamma}_{ki}} + \alpha_2 \frac{\overline{\Gamma}_{kj}}{\Gamma_{kj}}, \qquad (7)$$

where the instantaneous and average carrier to noise and interference ratios between user k and the desired receiver i are denoted as $\Gamma_{ki}$ and $\overline{\Gamma}_{ki}$, respectively.

In equation (7), it can be noted that instantaneous and average ratios are reversed for the interference link compared to the desired link, because in this example a high value of $C_{ki}$ will be indicative of a high scheduling priority. The variables $\alpha_1$ and $\alpha_2$ are weighting factors to account for what is most important: reducing the interference or improving the desired link. The weighting factors may also be user specific, e.g. such that users at the cell boarder to greater extent account for the average to instantaneous interference to other cell base stations. The parameters may be determined by simulation and preset, or adaptively tuned by the system under operation.

Equation (7) may also be generalized to a more general measure:

$$C_{ki} = f\left(\Gamma_{ki}, \overline{\Gamma}_{ki}, \Gamma_{kj}, \overline{\Gamma}_{kj}, ....\right), \tag{8}$$

where *f* is an objective function of suitable form to suppress generated interference when needed and enhance the impact of good quality between the sender and desired receiver. An arbitrary number of other cells may also be specified. The form of the function is implementation specific to the extent that other cells are included for at least one user in the system.

Normally, the above procedure for determining a scheduling measure is performed for each of a number of sending nodes, such as mobile terminals for uplink transmission, and a scheduling priority order is then determined for the sending nodes. Alternatively, the scheduling measure for an individual sending node may be used as a basis for a random access decision.

As illustrated in Fig. 6, the channel to the own receiving BS 20 experiences a "fading peak" and the interfered BS 25 is experiencing a "fading dip". This situation is indicative of a high value of the scheduling measure $C_{ki}$, which will be reflected as a high scheduling priority. When the interference to one or more interfered receiving base stations is instantaneously low compared to the average level, and the own channel is instantaneously good it may thus be suitable to schedule the mobile terminal 10 for transmission. This type of operation reflects the basics and main objectives of the proposed technology.

Dips are often very deep which should be particularly beneficial at the cell boarder, in terms of the fact that the relative reductions for a dip are more significant than the relative improvement for a fading peak. However, fading dips are generally short, so it may be harder to exploit the dips than the channel peaks. However, channel predictive methods do not make a difference between peaks or dips, and should hence allow for similar time durations for exploiting the dips as in traditional channel-dependent scheduling exploiting the channel peaks.

In addition to selecting a user among several users (or prioritizing the users) based on the scheduling metric in a frequency flat channel, the selection/prioritization may also be done in the frequency domain.

Assuming we consider frequency channel *n*, then the channel dependent scheduling criteria when selecting (or prioritizing) among different users for a channel *n* could for example be expressed as:

$$\tilde{u}_k(n) = \max_{u_k \in U} \arg \{C_k(n)\} \tag{9}$$

This can then be performed for all or a sub-set of the frequency channels *n* = 1, ..., *N*.

Generalizing for example eq. (6) to frequency domain based scheduling, the following equation results:

$$C_{ki}(n) = f(\Gamma_{ki}(n), \overline{\Gamma}_{ki}(n), ....) \tag{10}$$

Of course, all previously described scheduling metrics can be generalized likewise to multiple frequency channels.

In a random access channel case, a user may select among frequency channels according to:

$$\tilde{n}_k = \max_{n \in N} \arg \{C_k(n)\}, \tag{11}$$

where $N$ is the set of all considered/relevant channels.

Further, one may also jointly assign users and channels, something which is particularly useful when scheduling uplink data in OFDMA and the computation is made by a potentially receiving base station. For instance, assume that each user have a vector $\boldsymbol{c}_{ki}$ of scheduling measures, i.e. one value for each channel. Then a central scheduling mechanism, e.g. arranged in the base station, having access to multiple such vectors can assign users to different channels such that an aggregate performance measure, formed based on the scheduling measures, is optimized. Such measure could for instance be the sum of the metrics for each channel. Other performance measures can of course also be used. Additional scheduling constraints that may be added are to avoid allocating channels to users where the scheduling metric is below a threshold. In this way, one avoids sending data on poor resources where interference higher than the mean interference may occur.

As previously mentioned, the invention may for example be applied in TDD and FDD. In TDD, the reciprocity of the radio channel can be exploited to reduce the signaling and as a consequence allow for higher velocities for the mobile users. In a special embodiment of the invention, aimed at uplink transmissions, reciprocal channels are assumed (TDD) that enables users to measure downlink channels being representative for corresponding uplink channels, and subsequently to calculate a measure for the scheduling decision. This may e.g. be reported to the desired receiving base station to which the user is attached that then takes the scheduling decision or it may be used for a random access decision. Preferably, the channel quality estimation is based on transmission of pilot signals.

This option is indicated by dashed lines in Fig. 6, where the sending node 10 performs channel estimation based on a pilot signal from the interfered receiving node(s) 25, and optionally also based on a pilot signal from the desired receiving node 20. The channel estimates are then employed as estimates for the reverse direction from the sending node 10 to determine the scheduling measure.

While the invention is simpler to apply for data traffic aimed to be sent in the uplink, it is not limited hereto. The invention may for example be used in the downlink, e.g. a BS sending to a desired MS, while causing interference to one or more other receiving MS. Yet, this typically requires the BS to know which MSs are receiving or will be scheduled in downlink for other cells.

While it is well-known that the multi-user diversity gain is reduced in general for Multiple Input Multiple Output (MIMO) communication, because of the variance of at least the dominating channel Eigen-value, the invention may still offer similar multi-user diversity gain in a multi-user Single Input Multiple Output (SIMO) case as for the Single Input Single Output (SISO) case.

The invention is particularly applicable for uplink, Orthogonal Frequency Division Multiple Access (OFDMA) (with frequency domain based scheduling decisions) or frequency flat channels, and for multi-user SIMO. Moreover, it is also especially suitable for TDD UL, where the channel reciprocity can be exploited to reduce the amount of signaling and increase the permissible speed for the mobile users intending to transmit data.

Reference [2] discloses a cellular system including a first base station, a second base station and a mobile radio currently served by the first base station. Distributed resource control may be used in which the first base station alone or in combination with the mobile station makes resource management decisions without having to involve a central controller. Relative path gain is determined for an uplink signal from the mobile radio based on a comparison of a first average path gain related quantity for an uplink signal to the second non-serving base station with a second average path gain related quantity for an uplink signal to the first serving base station. In this way, the interfering effects in non-serving cells may be considered when managing resources, involving adjustment of the mobile transmission power or adjustment of the data rate, for uplink transmission from a mobile station.

The relative path gain proposed in [2] differs from the relation and associated scheduling measure suggested by the invention in that it is based on a comparison of the average path gain of different base stations. In addition, the invention concerns scheduling, whereas [2] relates to controlling transmission power and data rate for a mobile.

Reference [3] concerns uplink resource allocation to control inter-cell interference in a wireless communication system. The mobile station in [3] estimates the amount of inter-cell interference that the mobile station's uplink transmission causes, and the mobile station's uplink transmission parameters are adjusted accordingly before scheduling grants are allocated. For a given transmission from mobile user $i$, a suitable metric can be estimated as the ratio of received power at serving cell $J$ to the sum of the power received at all other cells, calculated as $\dfrac{g_{iJ}}{\displaystyle\sum_{j \neq J} g_{ij}}$, where $g_{ij}$ is the path gain between user i and base station $j$. Another related metric is the ratio $\dfrac{g_{iJ}}{g_{iK}}$ of the serving cell ($J$) path gain $g_{iJ}$ to the strongest neighbor cell ($K$) path gain $g_{iK}$.

In similarity to reference [2], reference [3] relates to adjustment of the mobile station's uplink transmission parameters, and the metric used in [3] is also based on a comparison between the path gain of the serving base station and the path gain of one or more non-serving base stations.

Reference [4] relates to measurements of pilot signals transmitted from a plurality of base station attachment points. The wireless terminal monitors for and attempts to recover broadcast loading factor information corresponding to attachment points, generates an interference report based on pilot-based measurements of the current attachment point and each of one or more different attachment pints, and the uplink loading factor information, and transmits the report to the current attachment point. In [4], the channel gains between the wireless terminal and different base stations are determined, and the interference cost $r_{0,k}$ of the wireless terminal at a neighboring base station $k$ is computed as

the ratio $\dfrac{G_{0,k}}{G_{0,0}}$ between the channel gain $G_{0,k}$ for the neighboring base station $k$ and the channel gain $G_{0,0}$ for the currently serving base station. The wireless terminal reports the interference costs to the current base station, which then makes uplink scheduling decisions to control uplink interference.

The interference cost in [4] is thus based on a ratio between the path gain of a non-serving base station and the path gain of the serving base station, in clear contrast to the scheduling relation and measure used by the invention.

In the present invention, the scheduling relation is representative of the degree of instantaneous interference relative to the average interference level of the considered interfered receiving node. In contrast to the invention, the prior art solutions can not exploit the fast fading variations of the considered channels, for example to find a dip when a sending node will interfere less than it does on average.

In the following, the invention will be described with reference to a set of flow diagrams illustrating various exemplifying and non-limiting embodiments of the invention.

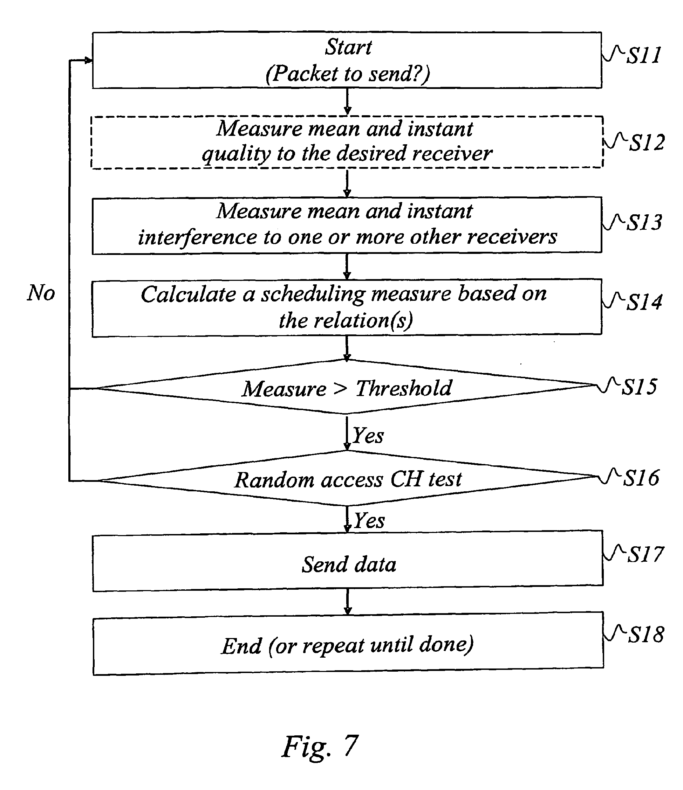

Fig. 7 is a schematic flow diagram of a communication and scheduling procedure according to an exemplary embodiment, directed towards an implementation for a random access channel. The basic flow diagram starts at step S11 when there is a packet to send from a considered sending node such as a mobile terminal. In the optional step S12, the mean quality and instantaneous quality to the desired receiver are measured. In step S13, the mean interference and instantaneous interference to one or more interfered receivers are measured or otherwise estimated. Usually, TDD is assumed here, allowing the exploitation of channel reciprocity. Based on a relation between mean and instantaneous interference, and optionally also based on a relation between instantaneous and mean quality, a scheduling measure may be calculated in step S14. The calculated measure is compared to a threshold in step S15, and if the measure meets the threshold (YES) a random access channel test is performed in step S16. If a positive random access decision can be taken (YES), the mobile is allowed to send data in step S17. The procedure ends in step S 18, or is repeated as and when necessary. Note that as an option in Fig. 7, multiple channels in the frequency domain may be (preferably concurrently) measured and the channel with the highest measure may then be selected and considered in S15 and S16.

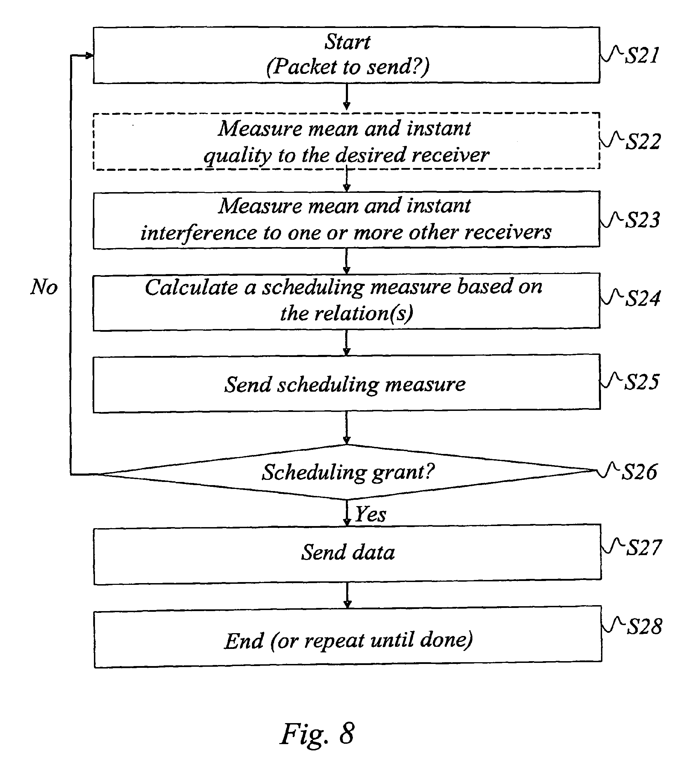

Fig. 8 is a schematic flow diagram of a communication and scheduling procedure according to another exemplary embodiment. In this exemplary embodiment, (uplink) transmissions are coordinated from a corresponding designated receiving node (or dedicated scheduling node) that selects which (potentially) sending user(s) shall transmit data. In this example, it is assumed that active users always have data to send and that the scheduler may schedule them when the scheduling criteria is fulfilled, or the (potentially) sending user(s) also forwards a scheduling request or queue status information that may guide the scheduler deciding the order in which user(s) are scheduled for transmission. The flow diagram starts at step S21. In the optional step S22, the mean quality and instantaneous quality to the desired receiver are measured. In step S23, the mean interference and instantaneous interference to one or more interfered receivers are measured or otherwise estimated. Usually, TDD is assumed here, allowing the exploitation of channel reciprocity. A scheduling measure is calculated in step S24 based on a relation between mean and instantaneous interference, and optionally also based on a relation between instantaneous and mean quality. In step S25, the calculated measure is sent to the scheduler, which in this example is arranged in a corresponding receiving node or in a dedicated scheduling node. If the (potentially) sending user receives a scheduling grant (YES) in step S26, it is allowed to send data in step S27 based on the grant allocation. The procedure ends in step S28, or is repeated as and when necessary. Also here can multiple frequency domain channels be assessed as an option. One could then select and send the best measure in S25, or sending a set of measures and then one, or possibly more, channels are selected and communicated in S26. The same aspect with regard to frequency domain based channel dependent scheduling is applicable to the following flow charts.

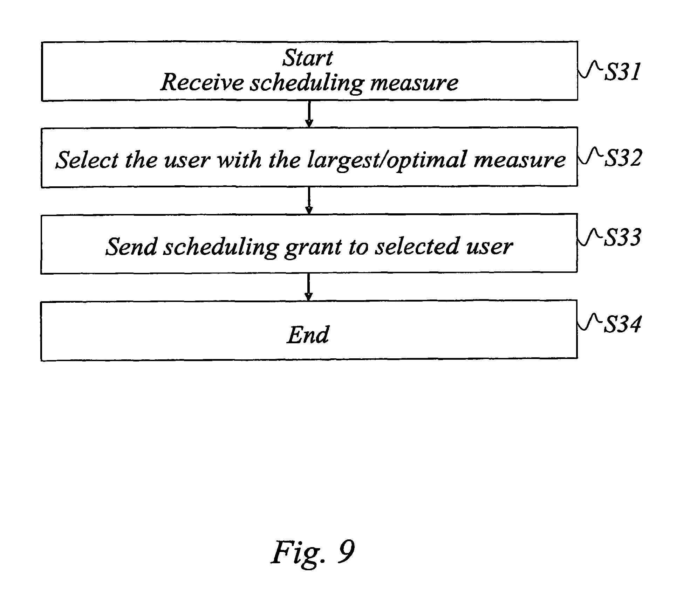

Fig. 9 is a schematic flow diagram of a scheduling procedure according to an exemplary embodiment corresponding to Fig. 8. The scheduler receives a scheduling measure in step S31, and performs scheduling based on the received scheduling measure, typically together with corresponding measures from other users. This usually means determining a scheduling priority order in dependence on the scheduling measures, selecting the user with the most optimal (e.g. largest) scheduling measure first as indicated in step S32, and allocating scheduling grant(s) to the user (s). In step S33, the scheduler sends the scheduling grant to the selected user(s). The scheduler procedure ends in step S34, or is repeated as and when necessary. This procedure, for the optional frequency domain channel dependent scheduling is evidently performed for each channel.

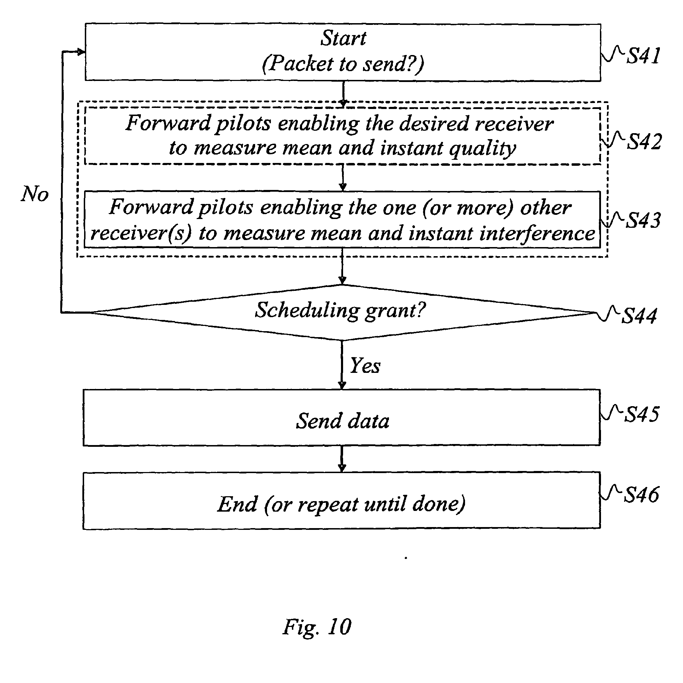

Fig. 10 is a schematic flow diagram of a communication and scheduling procedure according to yet another exemplary embodiment. For FDD, the potentially sending node (such as a mobile terminal) sends pilot(s) in the uplink, and the receiving nodes (such as BS) perform channel estimation measurements based on the received pilot(s). Those measurements are forwarded to an entity, preferably arranged in the desired receiving node for a distributed controlled case, or a central scheduling node for a centrally controlled case, which takes the scheduling decision(s) and informs a selected potential sending node that it may transmit data. The flow diagram starts at step S41. In the optional step S42, pilots are forwarded to enable the desired receiver to measure or estimate the mean quality and instantaneous quality. In step S43, pilots are forwarded to one or more interfered receivers to enable the receiver(s) to measure or estimate the mean interference and instantaneous interference. If a scheduling grant is received (YES) in step S44, the (potentially) sending user is allowed to send data in step S45. The procedure ends in step S18, or is repeated as and when necessary.

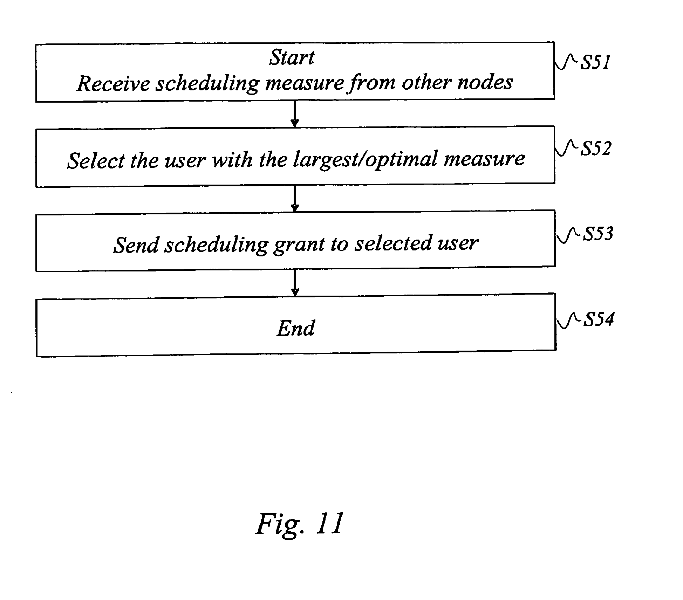

Fig. 11 is a schematic flow diagram of a scheduling procedure according to an exemplary embodiment corresponding to Fig. 10. The flow diagram of Fig. 11 basically follows the scheduling procedure explained in connection with the flow diagram of Fig. 9, including receiving scheduling measures (S51), selecting one or more users (S52) and sending scheduling grants (S53).

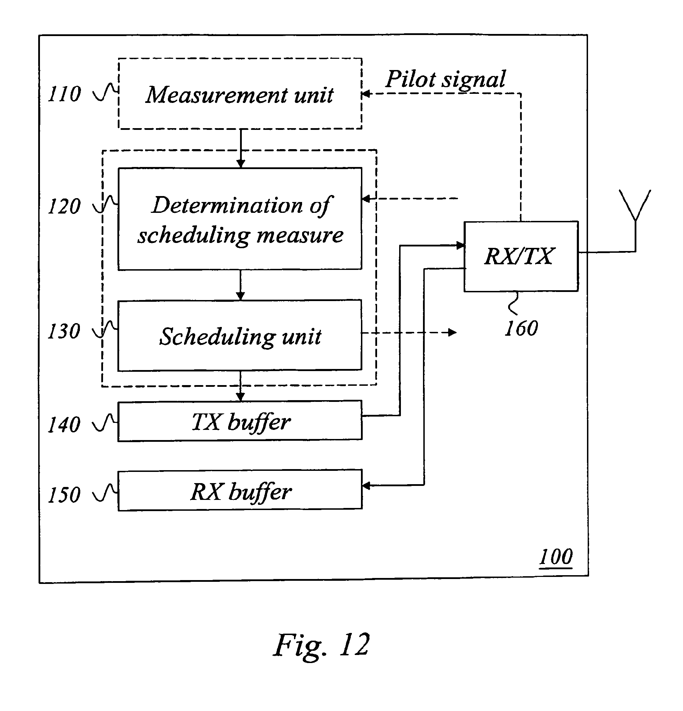

Fig. 12 is a schematic block diagram of a node with scheduling functionality according to a preferred exemplary embodiment. The node 100 basically comprises a unit 120 for determination of a scheduling measure, and a scheduling unit 130, as well as a TX buffer 140, an RX buffer 150 and a RX/TX module 160 connected to one or more antennas. Optionally, the node 100 also comprises a measurement unit 110 operating based on a received pilot signal to determine the above-described interference estimates. These measurements may then be used by the unit 120 for determination of a scheduling measure. The scheduling measure is forwarded to scheduling unit 130. If desired, the units 120 and 130 may be integrated. The scheduling unit 130 is configured for performing scheduling, for example to more or less directly allow access to a random access channel. Suitable data from the TX buffer 140 are finally selected for transmission via the RX/TX unit and the associated antenna(s), typically assuming uplink transmission from a mobile terminal. Preferably, the node 100 is a mobile terminal.

Alternatively, or as a complement, interference estimates may be transmitted from an external node to the unit 120 for determination of a scheduling measure.

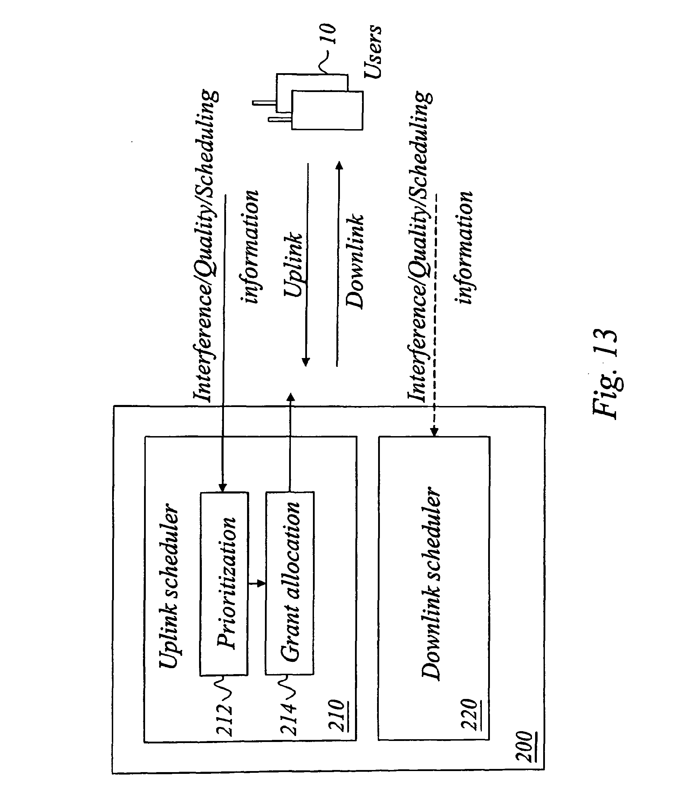

Fig. 13 is a schematic block diagram of a node on the network side for scheduling users according to a preferred exemplary embodiment. In this example, the node 200 may be a base station such as a Node B, a network controller or a dedicated scheduling node. Anyway, the node 200 basically includes an uplink scheduler 210 and a downlink scheduler 220. Although the invention is described in connection for the uplink scheduler, it should be understood that the invention may also be applied for the downlink scheduler. The uplink scheduler 210 typically includes a prioritization unit 212, and a grant allocation unit 214. The prioritization unit 212 receives information such as interference/quality information or scheduling information to be used for determining a scheduling priority order. There are several options available. For example, the prioritization unit 212 may receive information representative of the above-described scheduling measure or scheduling relation, and may use this information more or less directly in the scheduling process. Alternatively, the prioritization unit 212 may receive information representative of the above-described mean and instantaneous interference estimates, and optionally also mean and instantaneous quality estimates, allowing the prioritization unit to determine a scheduling measure for the considered user 10. Once the scheduling priority order has been determined, selected users 10 are allocated grants in the grant allocation unit 214 and informed about the grant allocation. For a frequency domain channel dependent scheduling case, the prioritization unit 212, considers one or multiple users, each with multiple received information valid for different channels, and preferably assigns the users to suitable channels.

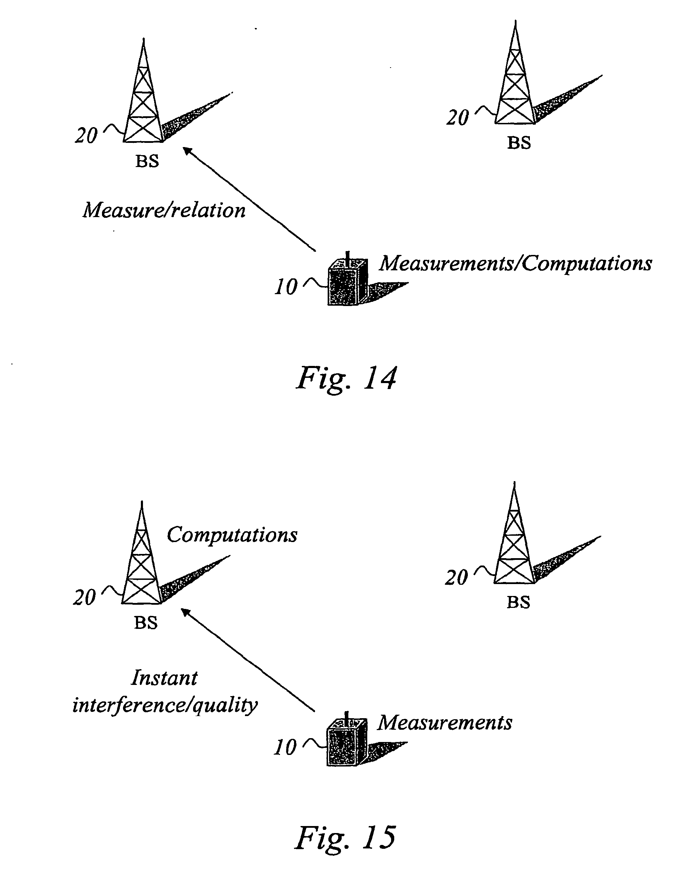

Fig. 14 is a schematic diagram illustrating a situation where measurements and computations are performed on the mobile side 10 and scheduling is performed on the base station side 20 based on a reported scheduling measure or corresponding scheduling relation between mean and instantaneous interference.

Fig. 15 is a schematic diagram illustrating a situation where measurements are performed on the mobile side 10 and computations and scheduling are performed on the base station side 20 based on reported interference/quality information. Preferably, instantaneous interference/quality estimates are reported regularly or at least intermittently at a number of occasions so that the base station 20, or similar network-based node, may estimate an average or mean interference/quality and thereby determine a relation between mean and instantaneous interference as described above. In this way, the base station 20 or similar node may determine a scheduling measure based on the relation and perform scheduling accordingly. It is of course possible for the mobile to determine the mean interference/quality and report this to the network side along with recently estimated up-to-date information on instantaneous interference/quality.

The embodiments described above are merely given as examples, and it should be understood that the present invention is not limited thereto. Further modifications, changes and improvements which retain the basic underlying principles disclosed and claimed herein are within the scope of the invention.

REFERENCES

[1] Information capacity and power control in single cell multiuser communications, by R. Knopp and P. Humblet, in Proc. International Conference on Communications, Seattle, WA, June 1995.

[2] WO 2006/091172 A1

[3] US 2007/0042784 A1

[4] WO 2007/047503 A1

[5] WO 2005/125263 A1

[6] WO 2004/040803 A1

**Claims**

1. A method for scheduling transmission in a wireless communication system, said wireless communication system comprising a sending node (10) for wireless communication with a designated receiving node (20), while causing interference to at least one other receiving node, denoted interfered receiving node (25), said method being **characterised by** comprising the step, of:

   - determining a scheduling measure for communication from said sending node (10) to said designated receiving node (20) based on a relation between:

      an estimate of mean interference caused to said at least one interfered receiving node (25) by said sending node (10); and
      an estimate of instantaneous interference caused to said at least one interfered receiving node (25) by said sending node (10); and

   - performing scheduling of transmission at least partly based on said scheduling measure.

2. The method of claim 1, wherein said relation is representative of the degree of instantaneous interference relative to the average interference level of said at least one interfered receiving node (25), and said method further comprises the step of monitoring the instantaneous interference relative to the mean interference caused by said sending node to said interfered receiving node(s).

3. The method of claim 2, wherein a low degree of relative instantaneous interference is indicative of relatively higher scheduling priority than a high degree of relative instantaneous interference.

4. The method of any of the preceding claims, wherein said step of determining a scheduling measure is also based on a measure of communication quality between said sending node (10) and said designated receiving node (20).

5. The method of claim 4, wherein said measure of communication quality is based on a relation between instantaneous quality and mean quality between said sending node (10) and said designated receiving node (20) to obtain a measure representative of the degree of instantaneous quality relative to the average quality for communication with said designated receiving node (20).

6. The method of any of the preceding claims, wherein said step of performing scheduling of transmission includes the step of scheduling transmission from said sending node (10) to said designated receiving node (20).

7. The method of any of the preceding claims, wherein said determining step is performed for each of a number of sending nodes to determine respective scheduling measures, and said step of performing scheduling of transmission includes the step of selecting a sending node among said sending nodes for transmission based on said scheduling measures.

8. The method of any of the preceding claims, wherein said determining step is performed for each of a number of frequency channels for said sending node to determine respective channel-dependent scheduling measures, and said step of performing scheduling of transmission includes the step of scheduling said sending node for transmission on a selected one of said frequency channels based on said channel-dependent scheduling measures.

9. The method of any of the preceding claims, wherein said determining step is performed for each of a number of frequency channels for each of a number of sending nodes to determine respective channel-dependent scheduling measures for said sending nodes, and said step of performing scheduling of transmission includes the step of selecting a sending node among said sending nodes for transmission on a selected frequency channel based on said channel-dependent scheduling measures.

10. The method of claim 9, wherein said step of performing scheduling of transmission includes the step of scheduling sending nodes based on said scheduling measures and assigning frequency channels to said sending nodes such that an aggregate performance measure, formed based on said scheduling measures, is optimized.

11. An arrangement for scheduling transmission in a wireless communication system, said wireless communication system comprising a sending node (10) for wireless communication with a designated receiving node (20), while causing interference to at least one other receiving node, denoted interfered receiving node (25), said scheduling arrangement being **characterised by** comprising:

- means (20; 30; 120; 212) for determining a scheduling measure for communication from said sending node to said designated receiving node based on a relation between, on one hand, an estimate of mean interference caused to said at least one interfered receiving node (25) by said sending node (10) and, on the other hand, an estimate of instantaneous interference caused to said at least one interfered receiving node (25) by said sending node (10); and
- means (20; 30; 130; 214) for performing scheduling of transmission at least partly based on said scheduling measure.

12. The arrangement of claim 11, wherein said means (20; 30; 120; 212) for determining a scheduling measure is configured for operation based on a relation between mean interference and instantaneous interference representative of the degree of instantaneous interference relative to the average interference level for said at least one interfered receiving node (25).

13. The arrangement of claim 11, wherein said sending node (10) is a mobile terminal, and said receiving nodes (20, 25) are base stations, and said scheduling includes uplink scheduling.

14. The arrangement of claim 13, wherein said scheduling arrangement is implemented in said mobile terminal (10) and said mobile terminal (10) is configured for performing said scheduling to take a scheduling decision, and said mobile terminal (10) is configured for determining access to a random access channel based on said scheduling decision.

15. The arrangement of claim 13, wherein a network-based scheduling node (20; 30; 200) is configured for performing said scheduling, and said mobile terminal (10) is configured for reporting information for allowing said scheduling node to make a scheduling decision among multiple candidate mobile terminals based on respective scheduling measures and to inform a selected mobile terminal about the scheduling decision.

16. The arrangement of claim 15, wherein said uplink scheduling is request-grant scheduling of mobile terminals wherein scheduling grants are allocated to mobile terminals at least partly in dependence on corresponding scheduling measures.

17. A scheduling node (20; 30; 200) in a wireless communication network, said wireless network: comprising at least one sending node (10) for wireless communication with a corresponding designated receiving node (20), while causing interference to at least one other receiving node, denoted interfered receiving node (25), said scheduling node being **characterised by** comprising:

- means (20; 30; 212) for obtaining scheduling information, for each of said at least one sending node, representative of a relation between, on one hand, an estimate of mean interference caused to said at least one interfered receiving node (25) by the sending node and, on the other hand, an estimate of instantaneous interference caused to said at least one interfered receiving node (25) by the sending node; and
- means (20; 30; 214) for scheduling said at least one sending node for communication with the corresponding designated receiving node at least partly based on the obtained scheduling information.

18. A scheduling node (20; 30; 100; 200) in a wireless communication network, said wireless network comprising at least one sending node (10) for wireless communication with a corresponding designated receiving node (20), while causing interference to at least one other receiving node, denoted interfered receiving node (25), said scheduling node being **characterised by** comprising:

- means (20; 30; 120; 212) for continuously obtaining information, for each of said at least one sending node, representative of an estimate of instantaneous interference caused to said at least one interfered receiving node (25) by the sending node; and
- means (20; 30; 120; 212) for determining, for each of said at least one sending node, scheduling information based on a relation between, on one hand, an estimate of mean interference caused to said at least one interfered receiving node (25) by the sending node and, on the other hand, up-to-date information of an estimate of instantaneous interference caused to said at least one interfered receiving node (25) by the sending node; and
- means (20; 30; 130; 214) for scheduling said at least one sending node for communication with the corresponding designated receiving node at least partly based on the determined scheduling information.

**Patentansprüche**

1. Verfahren für Scheduling von Übertragung in einem Drahtlos-Kommunikationssystem, wobei das Drahtlos-Kommunikationssystem einen Sendeknoten (10) für drahtlose Kommunikation mit einem vorgesehenen Empfangsknoten (20) umfasst, während einer Verursachung von Interferenz mit mindestens einem anderen Empfangsknoten, welcher als interferierter Empfangsknoten (25) bezeichnet wird, wobei das Verfahren durch Umfassen der Schritte **gekennzeichnet** ist:

- Bestimmen eines Scheduling-Maßes für Kommunikation von dem Sendeknoten (10) zu dem vorgesehenen Empfangsknoten (20) basierend auf einer Beziehung zwischen:

eine Abschätzung der mittleren Interferenz, die auf den mindestens einen interferierten Empfangsknoten (25) durch den Sendeknoten (10) verursacht wird; und
eine Abschätzung der momentanen Interferenz, die auf den mindestens einen interferierten Empfangsknoten (25) durch den Sendeknoten (10) verursacht wird; und

- mindestens teilweises Durchführen von Scheduling einer Übertragung basierend auf dem Scheduling-Maß.

2. Verfahren nach Anspruch 1, wobei die Beziehung repräsentativ ist für den Grad der momentanen Interferenz relativ zu dem durchschnittlichten Interferenz-Niveau des mindestens einen interferierten Empfangsknotens (25), und das Verfahren ferner den Schritt des Überwachens der momentanen Interferenz relativ zu der mittleren Interferenz, verursacht durch den Sendeknoten auf den/die interferierten Empfangsknoten, umfasst.

3. Verfahren nach Anspruch 2, wobei ein niedriger Grad von relativer momentaner Interferenz indikativ ist für eine relativ höhere Scheduling-Priorität als ein hoher Grad von relativer momentaner Interferenz.

4. Verfahren nach einem der vorangegangenen Ansprüche, wobei der Schritt des Bestimmens eines Scheduling-Maßes auch basiert auf einer Messung von Kommunikationsqualität zwischen dem Sendeknoten (10) und dem vorgesehenen Empfangsknoten (20).

5. Verfahren nach Anspruch 4, wobei das Maß der Kommunikationsqualität basiert auf einer Beziehung zwischen momentaner Qualität und mittlerer Qualität zwischen dem Sendeknoten (10) und dem vorgesehenen Empfangsknoten (20), um ein Maß repräsentativ für den Grad der momentanen Qualität relativ zu der durchschnittlichen Qualität für Kommunikation mit dem vorgesehenen Empfangsknoten (20) zu erlangen.

6. Verfahren nach einem der vorangegangenen Ansprüche, wobei der Schritt des Durchführens von Scheduling von Übertragung den Schritt beinhaltet des Scheduling von Übertragung von dem Sendeknoten (10) zu dem vorgesehenen Empfangsknoten (20).

7. Verfahren nach einem der vorangegangenen Ansprüche, wobei der Bestimmungsschritt für jeden einer Zahl von Sendeknoten durchgeführt wird, um jeweilige Scheduling-Maße zu bestimmen, und der Schritt des Durchführens von Scheduling von Übertragung den Schritt beinhaltet des Auswählens eines Sendeknotens unter den Sendeknoten für Übertragung, basierend auf den Scheduling-Maßen.

8. Verfahren nach einem der vorangegangenen Ansprüche, wobei der Bestimmungsschritt für jeden von einer Zahl von Frequenzkanälen für den Sendeknoten durchgeführt wird, um jeweilige kanalabhängige Scheduling-Maße zu bestimmen, und der Schritt des Durchführens von Scheduling von Übertragung den Schritt beinhaltet eines Scheduling des Sendeknotens zur Übertragung auf einem ausgewählten der Frequenzkanäle, basierend auf den kanalabhängigen Scheduling-Maßen.

9. Verfahren nach einem der vorangegangenen Ansprüche, wobei der Bestimmungsschritt für jeden von einer Zahl von Frequenzkanälen für jeden von einer Zahl von Sendeknoten durchgeführt wird, um jeweilige kanalabhängige Scheduling-Maße für die Sendeknoten zu bestimmen, und der Schritt des Durchführens von Scheduling von Übertragung den Schritt beinhaltet des Auswählens eines Sendeknotens unter den Sendeknoten zur Übertragung auf einem ausgewählten Frequenzkanal, basierend auf den kanalabhängigen Scheduling-Maßen.

10. Verfahren nach Anspruch 9, wobei der Schritt des Durchführens von Scheduling vor Übertragung den Schritt beinhaltet des Scheduling von Sendeknoten basierend auf den Scheduling-Maßen und Zuweisen von Frequenzkanälen zu den Sendeknoten, so dass ein aggregiertes Leistungsmaß, welches basierend auf den Scheduling-Maßen gebildet ist, optimiert wird.

11. Anordnung zum Scheduling von Übertragung in einem Drahtlos-Kommunikationssystem, wobei das Drahtlos-Kommunikationssystem einen Sendeknoten (10) für drahtlose Kommunikation mit einem vorgesehenen Empfangsknoten (20) umfasst, während einer Verursachung von Interferenz zu mindestens einem anderen Empfangsknoten, welcher als interferierter Empfangsknoten (25) bezeichnet wird, wobei die Scheduling-Anordnung **gekennzeichnet ist durch** Umfassen:

   - Mittel (20, 30; 120; 212) zum Bestimmen eines Scheduling-Maßes für Kommunikation von dem Sendeknoten zu dem vorgesehenen Empfangsknoten, basierend auf einem Verhältnis zwischen, auf der einen Seite, einer Abschätzung einer mittleren Interferenz, die auf den mindestens einen interferierten Empfangsknoten (25) **durch** den Sendeknoten (10) verursacht wird und, auf der anderen Seite, einer Abschätzung einer momentanen Interferenz, die auf dem einen interferierten Empfangsknoten (25) **durch** den Sendeknoten (10) verursacht wird; und
   - Mittel (20; 30; 130; 214) zum mindestens teilweisen Durchführen von Scheduling von Übertragung basierend auf dem Scheduling-Maß.

12. Anordnung nach Anspruch 11, wobei das Mittel (20; 30; 120; 212) zum Bestimmen eines Scheduling-Maßes konfiguriert ist für einen Betrieb basierend auf einer Beziehung zwischen mittlerer Interferenz und momentaner Interferenz, repräsentativ für den Grad von momentaner Interferenz relativ zu dem durchschnittlichen Interferenz-Niveau für den mindestens einen interferierten Empfangsknoten (25).

13. Anordnung nach Anspruch 11, wobei der Sendeknoten (10) ein Mobilendgerät ist und die Empfangsknoten (20, 25) Basisstationen sind, und das Scheduling Uplink-Scheduling beinhaltet.

14. Anordnung nach Anspruch 13, wobei die Scheduling-Anordnung in dem Mobilendgerät (10) implementiert ist und das Mobilendgerät (10) konfiguriert ist zum Durchführen des Scheduling, um eine Scheduling-Entscheidung zu treffen, und das Mobilendgerät (10) konfiguriert ist zum Bestimmen eines Zugriffs auf einen Random-Zugriffskanal basierend auf der Scheduling-Entscheidung.

15. Anordnung nach Anspruch 13, wobei ein netzbasierter Scheduling-Knoten (20; 30; 200) konfiguriert ist zum Durchführen des Schedulings, und das Mobilendgerät (10) konfiguriert ist zum Berichten von Information, um es dem Scheduling-Knoten zu ermöglichen, eine Scheduling-Entscheidung unter einer Vielzahl von Kandidaten-Mobilendgeräten zu treffen, basierend auf jeweiligen Scheduling-Maßen und, um ein ausgewähltes Mobilendgerät über die Scheduling-Entscheidung zu informieren.

16. Anordnung nach Anspruch 15, wobei das Uplink-Scheduling ein Anfrage-Bewilligungs-Scheduling von Mobilendgeräten ist, wobei Scheduling-Bewilligungen Mobilendgeräten zumindest teilweise in Abhängigkeit von jeweiligen Scheduling-Maßen zugewiesen werden.

17. Scheduling-Knoten (20; 30; 200) in einem Drahtlos-Kommunikationsnetz, wobei das Drahtlos-Netz mindestens einen Sendeknoten (10) für Drahtlos-Kommunikation mit einem entsprechenden vorgesehenen Empfangsknoten (20) umfasst, während einer Verursachung von Interferenz auf mindestens einem anderen Empfangsknoten, welcher als interferierter Empfangsknoten (25) bezeichnet wird, wobei der Scheduling-Knoten **gekennzeichnet ist durch** Umfassen:

- Mittel (20; 30; 212) zum Erlangen von Scheduling-Information, für jeden der mindestens einen Sendeknoten, repräsentativ für ein Verhältnis zwischen, auf der einen Seite, einer Abschätzung der mittleren Interferenz, welche auf dem mindestens einen interferiertem Empfangsknoten (25) durch den Sendeknoten verursacht wird, und, auf der anderen Seite, einer Abschätzung der momentanen Interferenz, die auf dem mindestens einen interferierten Empfangsknoten (25) **durch** den Sendeknoten verursacht wird; und
- Mittel (20; 30; 214) zum Scheduling des mindestens einen Sendeknotens für Kommunikation mit dem entsprechenden vorgesehenen Empfangsknoten, zumindest teilweise basierend auf der erlangten Scheduling-Information.

18. Scheduling-Knoten (20; 30; 100; 200) in einem Drahtlos-Kommunikationsnetz, wobei das Drahtlosnetz mindestens einen Sendeknoten (10) für drahtlose Kommunikation mit einem entsprechenden vorgesehenen Empfangsknoten (20) umfasst, während Verursachen einer Interferenz zu mindestens einem anderen Empfangsknoten, welcher als interferierter Empfangsknoten (25) bezeichnet wird, wobei der Scheduling-Knoten **gekennzeichnet ist durch** Umfassen:

- Mittel (20; 30; 120; 212) zum kontinuierlichen Erlangen von Information, für jeden der mindestens einen Sendeknoten, repräsentativ für eine Abschätzung der momentanen Interferenz, die auf dem mindestens einen interferierten Empfangsknoten (25) durch den Sendeknoten verursacht wird; und
- Mittel (20; 30; 120; 212) zum Bestimmen, für jeden der mindestens einen Sendeknoten, von Scheduling-Information basierend auf einer Beziehung zwischen, auf der einen Seite, einer Abschätzung einer mittleren Interferenz, die auf dem mindestens einen interferierten Empfangsknoten (25) **durch** den Sendeknoten verursacht wird, und, auf der anderen Seite, aktuelle Information über eine Abschätzung einer momentanen Interferenz, die auf dem mindestens einen interferierten Empfangsknoten (25) durch den Sendeknoten verursacht wird; und
- Mittel (20; 30; 130; 240) für Scheduling des mindestens einen Sendeknotens für Kommunikation mit dem entsprechenden vorgesehenen Empfangsknoten, zumindest teilweise basierend auf der bestimmten Scheduling-Information.

## Revendications

1. Procédé d'ordonnancement d'une émission dans un système de communication sans fil, ledit système de communication sans fil comprenant un noeud d'émission (10) destiné à communiquer sans fil avec un noeud de réception désigné (20) tout en provoquant des interférences avec au moins un autre noeud de réception, appelé noeud de réception brouillé (25), ledit procédé étant **caractérisé en ce qu'**il comprend les étapes consistant à :

- déterminer une mesure d'ordonnancement pour la communication depuis ledit noeud d'émission (10) vers ledit noeud de réception désigné (20), en fonction d'une relation entre :

une estimation des interférences moyennes causées audit au moins un noeud de réception brouillé (25) par ledit noeud d'émission (10) ; et
une estimation des interférences instantanées causées audit au moins un noeud de réception brouillé (25) par ledit noeud d'émission (10) ; et

- exécuter l'ordonnancement de l'émission au moins en partie en fonction de ladite mesure d'ordonnancement.

2. Procédé selon la revendication 1, dans lequel ladite relation est représentative du degré d'interférences instantanées par rapport au niveau d'interférences moyennes dudit au moins un noeud de réception brouillé (25) et ledit procédé comprend en outre l'étape consistant à surveiller les interférences instantanées par rapport aux interférences moyennes causées par ledit noeud d'émission au(x)dit(s) noeud(s) de réception brouillés.

**3.** Procédé selon la revendication 2, dans lequel un faible degré d'interférences instantanées relatives indique plutôt une priorité d'ordonnancement supérieure qu'un degré élevé d'interférences instantanées relatives.

**4.** Procédé selon l'une quelconque des revendications précédentes, dans lequel ladite étape de détermination d'une mesure d'ordonnancement est également fondée sur une mesure de la qualité de communication entre ledit noeud d'émission (10) et ledit noeud de réception désigné (20).

**5.** Procédé selon la revendication 4, dans lequel ladite mesure de la qualité de communication est fondée sur une relation entre la qualité instantanée et la qualité moyenne entre ledit noeud d'émission (10) et ledit noeud de réception désigné (20) afin d'obtenir une mesure qui représente le degré de qualité instantanée par rapport à la qualité moyenne de communication avec ledit noeud de réception désigné (20).

**6.** Procédé selon l'une quelconque des revendications précédentes, dans lequel ladite étape d'ordonnancement de l'émission comprend l'étape consistant à ordonnancer l'émission depuis ledit noeud d'émission (10) vers ledit noeud de réception désigné (20).

**7.** Procédé selon l'une quelconque des revendications précédentes, dans lequel ladite étape de détermination est exécutée pour chacun des noeuds parmi un certain nombre de noeuds d'émission, afin de déterminer des mesures d'ordonnancement respectives, et ladite étape d'exécution de l'ordonnancement de l'émission comprend l'étape consistant à sélectionner un noeud d'émission parmi lesdits noeuds d'émission, pour une émission fondée sur lesdites mesures d'ordonnancement.

**8.** Procédé selon l'une quelconque des revendications précédentes, dans lequel ladite étape de détermination est exécutée pour chaque canal parmi un certain nombre de canaux de fréquence pour ledit noeud d'émission, afin de déterminer des mesures d'ordonnancement respectives qui dépendent des canaux, et ladite étape d'exécution de l'ordonnancement de l'émission comprend l'étape consistant à ordonnancer ledit noeud d'émission pour l'émission sur un canal sélectionné parmi lesdits canaux de fréquence, en fonction desdites mesures d'ordonnancement qui dépendent des canaux.

**9.** Procédé selon l'une quelconque des revendications précédentes, dans lequel ladite étape de détermination est exécutée pour chaque canal parmi un certain nombre de canaux de fréquence, pour chaque noeud parmi un certain nombre de noeuds d'émission, afin de déterminer des mesures d'ordonnancement respectives qui dépendent des canaux pour lesdits noeuds d'émission, et ladite étape d'exécution de l'ordonnancement de l'émission comprend l'étape consistant à sélectionner un noeud d'émission parmi lesdits noeuds d'émission pour l'émission sur un canal de fréquence, en fonction desdites mesures d'ordonnancement qui dépendent des canaux.

**10.** Procédé selon la revendication 9, dans lequel ladite étape d'exécution de l'ordonnancement de l'émission comprend l'étape consistant à ordonnancer des noeuds d'émission en fonction desdites mesures d'ordonnancement et à attribuer des canaux de fréquence auxdits noeuds d'émission de manière à optimiser une mesure de performances agrégées, formées en fonction desdites mesures d'ordonnancement.

**11.** Agencement d'ordonnancement de l'émission dans un système de communication sans fil, ledit système de communication sans fil comprenant un noeud d'émission (10) destiné à communiquer sans fil avec un noeud de réception désigné (20) tout en provoquant des interférences avec au moins un autre noeud de réception, appelé noeud de réception brouillé (25), ledit agencement d'ordonnancement étant **caractérisé par** :

- un moyen (20 ; 30 ; 120 ; 212) destiné à déterminer une mesure d'ordonnancement pour la communication depuis ledit noeud d'émission vers ledit noeud de réception désigné, en fonction d'une relation entre, d'une part, une estimation des interférences moyennes causées audit au moins un noeud de réception brouillé (25) par ledit noeud d'émission (10) et, d'autre part, une estimation des interférences instantanées causées audit au moins un noeud de réception brouillé (25) par ledit noeud d'émission (10) ; et
- un moyen (20 ; 30 ; 130 ; 214) destiné à exécuter l'ordonnancement de l'émission au moins en partie en fonction de ladite mesure d'ordonnancement.

**12.** Agencement selon la revendication 11, dans lequel ledit moyen (20 ; 30 ; 120 ; 212) destiné à déterminer une mesure d'ordonnancement est configuré pour fonctionner en fonction d'une relation entre les interférences moyennes et les interférences instantanées, représentant le degré d'interférences instantanées par rapport au niveau d'interférences moyennes pour ledit au moins un noeud de réception brouillé (25).

**13.** Agencement selon la revendication 11, dans lequel ledit noeud d'émission (10) est un terminal mobile et lesdits noeuds de réception (20, 25) sont des stations de base et ledit ordonnancement comprend l'ordonnancement sur la liaison montante.

**14.** Agencement selon la revendication 13, dans lequel ledit agencement d'ordonnancement est mis en oeuvre sur ledit terminal mobile (10) et ledit terminal mobile (10) est configuré pour exécuter ledit ordonnancement afin de prendre une décision d'ordonnancement et ledit terminal mobile (10) est configuré pour déterminer l'accès à un canal à accès aléatoire en fonction de ladite décision d'ordonnancement.

**15.** Agencement selon la revendication 13, dans lequel un noeud d'ordonnancement installé sur le réseau (20 ; 30 ; 200) est configuré pour exécuter ledit ordonnancement et ledit terminal mobile (10) est configuré pour fournir des informations afin de permettre audit noeud d'ordonnancement de prendre une décision d'ordonnancement parmi de multiples terminaux mobiles qui sont candidats, en fonction de mesures d'ordonnancement respectives, et pour informer un terminal mobile sélectionné de la décision d'ordonnancement.

**16.** Agencement selon la revendication 15, dans lequel ledit ordonnancement sur la liaison montante est un ordonnancement par acceptation de demandes parmi des terminaux mobiles, les acceptations d'ordonnancement étant attribuées à des terminaux mobiles au moins en partie en fonction de mesures d'ordonnancement correspondantes.

**17.** Noeud d'ordonnancement (20 ; 30 ; 200) dans un système de communication sans fil, ledit système de communication sans fil comprenant au moins un noeud d'émission (10) destiné à communiquer sans fil avec un noeud de réception désigné (20) correspondant tout en provoquant des interférences avec au moins un autre noeud de réception, appelé noeud de réception brouillé (25), ledit noeud d'ordonnancement étant **caractérisé en ce qu'**il comprend :

  - un moyen (20 ; 30 ; 212) destiné à obtenir des informations d'ordonnancement, pour chacun des noeuds parmi ledit au moins un noeud d'émission, qui sont représentatives d'une relation entre, d'une part, une estimation des interférences moyennes causées audit au moins un noeud de réception brouillé (25) par le noeud d'émission et, d'autre part, une estimation des interférences instantanées causées audit au moins un noeud de réception brouillé (25) par le noeud d'émission ; et
  - un moyen (20 ; 30 ; 214) destiné à ordonnancer ledit au moins un noeud d'émission afin de communiquer avec le noeud de réception désigné correspondant, au moins en partie en fonction des informations d'ordonnancement obtenues.

**18.** Noeud d'ordonnancement (20 ; 30 ; 100 ; 200) dans un système de communication sans fil, ledit système de communication sans fil comprenant au moins un noeud d'émission (10) destiné à communiquer sans fil avec un noeud de réception désigné (20) correspondant tout en provoquant des interférences avec au moins un autre noeud de réception, appelé noeud de réception brouillé (25), ledit noeud d'ordonnancement étant **caractérisé en ce qu'**il comprend :

  - un moyen (20 ; 30 ; 120 ; 212) destiné à obtenir en continu des informations, pour chacun des noeuds parmi ledit au moins un noeud d'émission, qui sont représentatives d'une estimation des interférences instantanées causées audit au moins un noeud de réception brouillé (25) par le noeud d'émission ; et
  - un moyen (20 ; 30 ; 120 ; 212) destiné à déterminer, pour chacun des noeuds parmi ledit au moins un noeud d'émission, des informations d'ordonnancement qui sont fondées sur une relation entre, d'une part, une estimation des interférences moyennes causées audit au moins un noeud de réception brouillé (25) par le noeud d'émission et, d'autre part, des informations mises à jour d'une estimation des interférences instantanées causées audit au moins un noeud de réception brouillé (25) par le noeud d'émission ; et
  - un moyen (20 ; 30 ; 130 ; 214) destiné à ordonnancer ledit au moins un noeud d'émission afin de communiquer avec le noeud de réception désigné correspondant, au moins en partie en fonction des informations d'ordonnancement déterminées.

EP 2 096 807 B1

*Fig. 1*

*Fig. 2*

START

DETERMINING A SCHEDULING MEASURE BASED ON A RELATION BETWEEN MEAN INTERFERENCE AND INSTANTANEOUS INTERFERENCE CAUSED BY A SENDING NODE TO ONE OR MORE INTERFERED RECEIVING NODES — S1

SCHEDULING TRANSMISSION BASED ON THE SCHEDULING MEASURE — S2

END

*Fig. 3*

*Fig. 4*
*(Prior art)*

EP 2 096 807 B1

*Fig. 5*

EP 2 096 807 B1

Fig. 6

EP 2 096 807 B1

```
┌─────────────────────────────────────────────────────┐
│                    Start                              │  ⌒S11
│              (Packet to send?)                        │
└─────────────────────────────────────────────────────┘
                        │
                        ▼
┌ ─ ─ ─ ─ ─ ─ ─ ─ ─ ─ ─ ─ ─ ─ ─ ─ ─ ─ ─ ─ ─ ─ ─ ─ ─ ┐
    │              Measure mean and instant              │  ⌒S12
│              quality to the desired receiver          │
└ ─ ─ ─ ─ ─ ─ ─ ─ ─ ─ ─ ─ ─ ─ ─ ─ ─ ─ ─ ─ ─ ─ ─ ─ ─ ┘
                        │
                        ▼
┌─────────────────────────────────────────────────────┐
│              Measure mean and instant                 │  ⌒S13
│     interference to one or more other receivers       │
└─────────────────────────────────────────────────────┘
                        │
                        ▼
┌─────────────────────────────────────────────────────┐
│         Calculate a scheduling measure based on       │  ⌒S14
│                  the relation(s)                      │
└─────────────────────────────────────────────────────┘
                        │
                        ▼
      No           ◇ Measure > Threshold ◇                  ⌒S15
                        │ Yes
                        ▼
                 ◇ Random access CH test ◇                  ⌒S16
                        │ Yes
                        ▼
┌─────────────────────────────────────────────────────┐
│                    Send data                          │  ⌒S17
└─────────────────────────────────────────────────────┘
                        │
                        ▼
┌─────────────────────────────────────────────────────┐
│              End (or repeat until done)               │  ⌒S18
└─────────────────────────────────────────────────────┘
```

Fig. 7

| Start (Packet to send?) | ∿S21 |

| Measure mean and instant quality to the desired receiver | ∿S22 |

| Measure mean and instant interference to one or more other receivers | ∿S23 |

*No*

| Calculate a scheduling measure based on the relation(s) | ∿S24 |

| Send scheduling measure | ∿S25 |

Scheduling grant? ∿S26

↓ *Yes*

| Send data | ∿S27 |

| End (or repeat until done) | ∿S28 |

*Fig. 8*

```
┌─────────────────────────────────────────────┐
│                    Start                      │  ⌐S31
│           Receive scheduling measure          │
└─────────────────────────────────────────────┘
                      │
                      ▼
┌─────────────────────────────────────────────┐
│  Select the user with the largest/optimal measure │  ⌐S32
└─────────────────────────────────────────────┘
                      │
                      ▼
┌─────────────────────────────────────────────┐
│      Send scheduling grant to selected user   │  ⌐S33
└─────────────────────────────────────────────┘
                      │
                      ▼
┌─────────────────────────────────────────────┐
│                     End                       │  ⌐S34
└─────────────────────────────────────────────┘
```

*Fig. 9*

Start
(Packet to send?) ⌇∿S41

Forward pilots enabling the desired receiver
to measure mean and instant quality ⌇∿S42

No

Forward pilots enabling the one (or more) other
receiver(s) to measure mean and instant interference ⌇∿S43

Scheduling grant? ∿S44

Yes

Send data ∿S45

End (or repeat until done) ∿S46

Fig. 10

Start
Receive scheduling measure from other nodes    ⟩S51

Select the user with the largest/optimal measure    ⟩S52

Send scheduling grant to selected user    ⟩S53

End    ⟩S54

*Fig. 11*

*Fig. 12*

*Fig. 13*

EP 2 096 807 B1

*Fig. 14*

*Fig. 15*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006091172 A1
- US 20070042784 A1
- WO 2007047503 A1
- WO 2005125263 A1
- WO 2004040803 A1

### Non-patent literature cited in the description

- **R. Knopp ; P. Humblet.** Information capacity and power control in single cell multiuser communications. *Proc. International Conference on Communications, Seattle, WA,* June 1995